# EUROPEAN PATENT SPECIFICATION

(11) **EP 0 963 525 B1**
(45) Date of publication and mention of the grant of the patent: **10.04.2002**
(21) Application number: 98903204.0
(22) Date of filing: 12.02.1998
(51) Int. Cl.: F16H 48/00, F16H 48/10

(54) **DIFFERENTIAL GEAR**
AUSGLEICHSGETRIEBE
ENGRENAGE DIFFERENTIEL

(30) Priority: 01.03.1997 GB 9704281
(43) Date of publication of application: 15.12.1999
(73) Proprietor: HANCOCK, Frank John Thompson, Alderley Edge, Cheshire SK9 7AT (GB)
(72) Inventor: HANCOCK, Frank John Thompson, Alderley Edge, Cheshire SK9 7AT (GB)
(74) Representative: McNeight, David Leslie
(86) International application number: GB9800444
(87) International publication number: WO9838443

(56) References cited:
- WO-A-92/01877
- WO-A-96/31713
- US-A- 2 270 567
- US-A- 3 344 687

## Description

This invention relates to differential gears.

In US 3,344,687 there is disclosed a mechanism which may be considered to comprise an input member and two output half shafts rotatably mounted about a common axis of rotation, each half shaft fixedly carrying an output member, coupling means coupling the input member differentially to the output members, the coupling means comprising at least one toothed wheel being mounted in a hollow space of the input member so as to rotate about an axis of rotation which is perpendicular to and intersects said common axis of rotation and positively engaging in complementary recesses in the output members, whereby rotation of said at least one toothed wheel permitting relative rotation of the output members.

In WO 96/31713 is disclosed a differential gear comprising an input member constituting a cage for rolling means and having drive input means and being mounted for rotation about an output axis comprising half shafts either side of the input member, each half shaft having a clutch plate, the clutch plates being disposed either side of the input member and being urgeable together so as to clutch against said rolling means, whereby a differential output effect is achieved by the clutch plates rolling over the rolling means.

The clutch arrangement in such a gear requires spring means, e.g. belleville washers urging the plates together with the rolling means, and high contact pressures are required which in turn requires a certain surface hardness specification which can be expensive and demanding in terms of quality control.

The present invention provides a differential gear that is less expensive and easier to manufacture.

The invention comprises differential gear comprising: an input member, two half shafts rotatably mounted about a common axis of rotation, an output member fixedly carried on each half shaft, coupling means comprising at least one coupling member coupling the input member differentially to the output members, the coupling member extending towards the output members and positively engaging the output members whereby rotation of the coupling member permits relative rotation of the output members, the coupling member being mounted in the input member for rotation about an axis in the coupling member which is perpendicular to and intersects the said common axis of rotation of the half shafts characterised in that said input member comprises a slot in which said coupling member is mounted for rotation.

The input member may comprise a circular disc and said throughway comprises a chordal slot. Said chordal slot may include a bearing arrangement for the coupling member. Said bearing arrangement may comprise a bore adapted to receive a pin on which the coupling member rotates. Said bore may be drilled in from the periphery of said input member, or moulded from one side.

The coupling member may comprise a toothed wheel the teeth of which engage in complementary recesses in the output member. The recesses may comprise throughways or indentations.

The input member may be adapted to be driven peripherally, as by comprising a worm wheel.

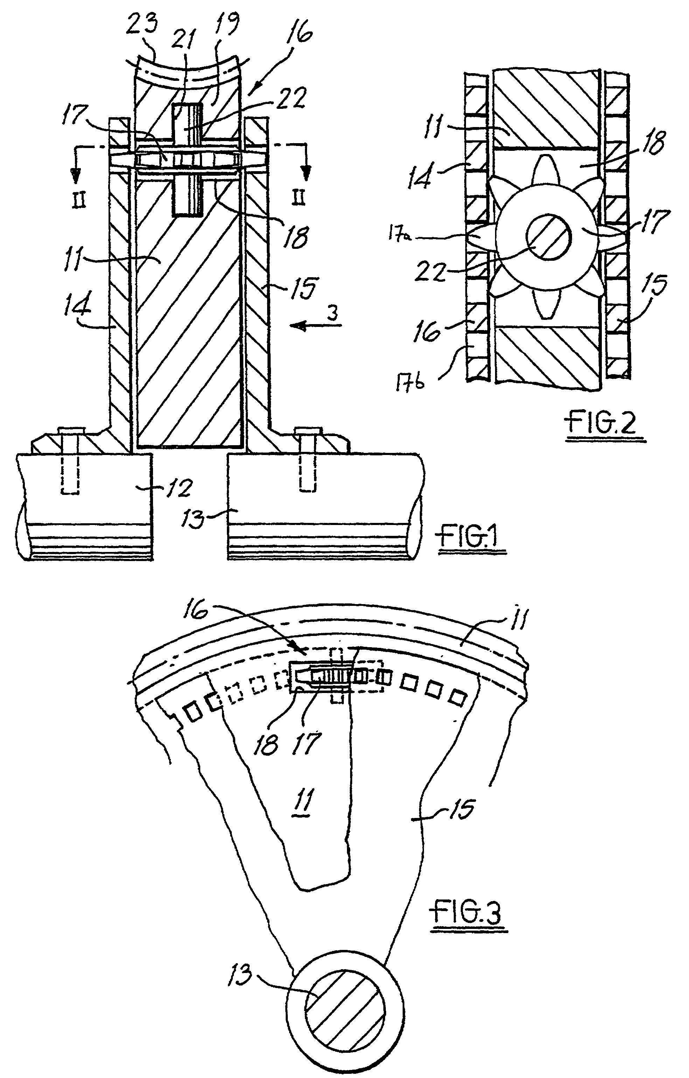

One embodiment of a differential gear according to the invention will now be described with reference to the accompanying drawings, in which:-
- Figure 1: is a half axial section;
- Figure 2: is a section on the line II-II of Figure 2; and
- Figure 3: is a part cut-away partial view on Arrow 3 of Figure 1.

The drawings illustrate a differential gear comprising an input member 11 mounted for rotation with respect to output half shafts 12, 13 each fixedly carrying an output member 14, 15 and coupling means 16 coupling the input member 11 differentially to the output members 14, 15 said coupling means 16 comprising at least one coupling member 17 mounted, in a throughway 18 of the input member 11 to extend from it towards the output members, for rotation about an axis radial of the half shafts 12, 13 and positively engaging the output members 14, 15 rotation of said coupling member 17 about its axis of rotation permitting relative rotation of the output members 14, 15 on their half shafts 12, 13.

The input member 11 comprises a circular disc, which may be of metal or plastics material, and said throughway 18 comprises a chordal slot, which may be cast or moulded in or machined out.

Said chordal slot 18 includes a bearing arrangement 19 for the coupling member 17, said bearing arrangement 19 comprising a bore 21 adapted to receive a pin 22 on which the coupling member 17 rotates. The bore 21 is drilled in from the periphery 23 of the input member 11. If, as is possible, the input member disc 11 is moulded, a slot may be moulded in from one face to receive the pin 22 which is essentially captive after assembly.

The coupling member 17 comprises a toothed wheel the teeth 17a of which engage in complementary recesses 17b in the output members 14, 15. The recesses 17b comprise throughways or indentations - they may be cast or moulded in or machined out.

The input member 11 is adapted to be driven peripherally, as by a worm wheel.

The gear is robust and simple to manufacture. As there is positive engagement, there is no need to maintain contact pressure sufficient to ensure non-slip operation. So, in turn, there is no demanding surface hardness specification which simplifies the manufacturing process. Assembly of the components is straightforward.

The gear is compact and can be accommodated within a gear box. For low speed applications, balance is not a problem and a single coupling member can suffice. The engagement is at a distance from the half shafts and the resulting mechanical advantage reduces the forces so that the coupling member itself need not be robust - a steel pressing or stamping even a plastic moulding may be found adequate.

The teeth of the coupling member can be of any shape found satisfactory for positive engagement.

The gear is useful in connection with golf trollies, but will clearly find application in many other drive trains.

## Claims

1. A differential gear comprising:
• an input member (11);
• two half shafts (12, 13) rotatably mounted about a common axis of rotation;
• an output member (14, 15) fixedly carried on each half shaft (12, 13);
• coupling means (16) comprising at least one coupling member (17) coupling the input member (11) differentially to the output members (14, 15);
• the coupling member (17) extending towards the output members (14, 15) and positively engaging the output members (14,15) whereby rotation of the coupling member (17) permits relative rotation of the output members (14, 15);
• the coupling member (17) being mounted in the input member (11) for rotation about an axis in the coupling member (17) which is perpendicular to and intersects the said common axis of rotation of the half shafts (12, 13);
**characterised in that** said input member (11) comprises a slot (18) in which said coupling member (17) is mounted for rotation.

2. A gear according to claim 1, in which the input member (11) comprises a circular disc and said slot (18) comprises a chordal slot.

3. A gear according to claim 2, in which said chordal slot (18) includes a bearing arrangement (19) for the coupling member (17).

4. A gear according to claim 3, in which said bearing arrangement (19) comprises a bore (21) adapted to receive a pin (22) on which the coupling member (17) rotates.

5. A gear according to claim 4, in which said bore (21) is drilled in from the periphery of said input member (11).

6. A gear according to any one of claims 1 to 5, in which the coupling member (17) comprises a toothed wheel the teeth of which engage in complementary recesses (17b) in the output members (14, 15).

7. A gear according to claim 6, in which the recesses (17b) comprise throughways.

8. A gear according to claim 6, in which the recesses (17b) comprise indentations.

9. A gear according to any one of claims 1 to 8, in which the input members (11) is adapted to be driven peripherally.

10. A gear according to claim 9, in which the input member (11) comprises a worm wheel.

## Patentansprüche

1. Ausgleichsgetriebe, welches aufweist:
• ein Eingangsglied (11);
• zwei Halbwellen (12, 13), die um eine gemeinsame Drehachse drehbar gelagert sind;
• ein Ausgangsglied (14, 15),das fest auf jeder Halbwelle (12, 13) getragen wird;
• eine Kupplungsvorrichtung (16) mit wenigstens einem Kupplungsglied (17), welches das Eingangsglied (11) differentiell mit den Ausgangsgliedern (14, 15) kuppelt;
• wobei sich das Kupplungsglied (17) zu den Ausgangsgliedern (14, 15) hin erstreckt und in formschlüssigen Eingriff mit den Ausgangsgliedern (14, 15) tritt, wodurch eine Drehung des Kupplungsgliedes (17) eine relative Drehung der Ausgangsglieder (14, 15) zuläßt;
• wobei das Kupplungsglied (17) in dem Eingangsglied (11) angebracht ist für eine Drehung um eine Achse in dem Kupplungsglied (17), welche senkrecht zu der gemeinsamen Drehachse der Halbwellen (12, 13) verläuft und diese schneidet;
**dadurch gekennzeichnet, daß** das Eingangsglied (11) einen Schlitz (18) aufweist, in welchem das Kupplungsglied (17) drehbar angeordnet ist.

2. Getriebe nach Anspruch 1, bei welchem das Eingangsglied (11) eine kreisförmige Scheibe und der Schlitz (18) einen Schlitz entlang der Sehne aufweisen.

3. Getriebe nach Anspruch 2, bei welchem der Schlitz (18) entlang der Sehne eine Lageranordnung (19) für das Kupplungsglied (17) aufweist.

4. Getriebe nach Anspruch 3, bei welchem die Lageranordnung (19) eine Bohrung (21) aufweist, welche zur Aufnahme eines Stiftes (22) ausgebildet ist, auf dem sich das Kupplungsglied (17) dreht.

5. Getriebe nach Anspruch 4, bei welchem die Bohrung (21) von der Peripherie des Eingangsglieds (11) hineingebohrt ist.

6. Getriebe nach einem der Ansprüche 1 bis 5, bei welchem das Kupplungsglied (17) ein Zahnrad aufweist, dessen Zähne in komplementäre Vertiefungen (17b) in den Ausgangsgliedern (14, 15) eingreifen.

7. Getriebe nach Anspruch 6, bei welchem die Vertiefungen (17b) Durchgänge sind.

8. Getriebe nach Anspruch 6, bei welchem die Vertiefungen (17b) Einbuchtungen sind.

9. Getriebe nach einem der Ansprüche 1 bis 8, bei welchem die Eingangsglieder (11) am Außenumfang antreibbar sind.

10. Getriebe nach Anspruch 9, bei welchem das Eingangsglied (11) ein Schneckenrad aufweist.

## Revendications

1. Engrenage différentiel comportant :
un élément d'entrée (11);
deux demi-arbres (12, 13) montés de façon rotative autour d'un axe de rotation commun;
un élément de sortie (14, 15) porté de façon fixe sur chaque demi-arbre (12, 13);
des moyens d'accouplement (16) comportant au moins un élément d'accouplement (17) reliant l'élément d'entrée (11) de manière différentielle aux éléments de sortie (14, 15);
l'élément d'accouplement (17) s'étendant vers les éléments de sortie (14, 15) et engageant de manière positive les éléments de sortie (14, 15) de sorte qu'une rotation de l'élément d'accouplement (17) permet une rotation relative des éléments de sortie (14, 15);
l'élément d'accouplement (17) étant monté dans l'élément d'entrée (11) pour rotation autour d'un axe dans l'élément d'accouplement (17) qui est perpendiculaire à et coupe ledit axe de rotation commun des demi-arbres (12, 13);
**caractérisé en ce que** ledit élément d'entrée (11) comporte une fente (18) dans laquelle ledit élément d'accouplement (17) est monté pour rotation.

2. Engrenage selon la revendication 1, dans lequel l'élément d'entrée (11) comporte un disque circulaire et ladite fente (18) comporte une fente de corde.

3. Engrenage selon la revendication 2, dans lequel ladite fente (18) comprend un agencement de palier (19) pour l'élément d'accouplement (17).

4. Engrenage selon la revendication 3, dans lequel ledit agencement de palier (19) comporte un alésage (21) prévu pour recevoir un axe (12) sur lequel tourne l'élément d'accouplement (17).

5. Engrenage selon la revendication 4, dans lequel ledit alésage (21) est percé depuis la périphérie dudit élément d'entrée (11).

6. Engrenage selon l'une quelconque des revendications 1 à 5, dans lequel l'élément d'accouplement (17) comporte une roue dentée dont les dents s'engagent dans des renfoncements complémentaires (17b) dans les éléments de sortie (14, 15).

7. Engrenage selon la revendication 6, dans lequel les renfoncements (17b) comportent des passages.

8. Engrenage selon la revendication 6, dans lequel les renfoncements (17b) comportent des empreintes.

9. Engrenage selon l'une quelconque des revendications 1 à 8, dans lequel l'élément d'entrée (11) est prévu pour être entraîné de manière périphérique.

10. Engrenage selon la revendication 9, dans lequel l'élément d'entrée (11) comprend une roue à vis sans fin.
